# EUROPEAN PATENT SPECIFICATION

(11) **EP 2 045 383 B1**
(45) Date of publication and mention of the grant of the patent: **05.11.2014**
(21) Application number: 07744585.6
(22) Date of filing: 01.06.2007
(51) Int. Cl.: D04B 15/99, D04B 15/96, G05B 19/416

(54) **FLAT KNITTING MACHINE**
FLACHSTRICKMASCHINE
MACHINE A TRICOTER RECTILIGNE

(30) Priority: 27.06.2006 JP 2006177066
(43) Date of publication of application: 08.04.2009
(73) Proprietor: Shima Seiki Manufacturing., Ltd., Wakayama-shi, Wakayama 6410003 (JP)
(72) Inventor: MINAKATA, Katsuji, Wakayama 641-0003 (JP); MORI, Atsushi, Wakayama 641-0003 (JP)
(74) Representative: Tomlinson, Kerry John
(86) International application number: PCT/JP2007/061197
(87) International publication number: WO 2008/001581

(56) References cited:
- EP-A1- 1 672 109
- GB-A- 1 111 797
- JP-A- 2002 069 807
- JP-A- 2003 157 114
- JP-B2- 3 092 005

## Description

### TECHNICAL FIELD

The present invention relates to a knitting machine, such as a flat knitting machine, glove knitting machine, hosiery knitting machine and the like, in which a carriage reciprocates on a needle bed.

### BACKGROUND

A knitting machine in which a carriage reciprocates on a needle bed has been conventionally known. In this specification, this type of knitting machine is called "flat knitting machine." Although the speed of the carriage needs to be increased in order to realize a high-speed flat knitting machine, the flat knitting machine vibrates significantly as the carriage travels, and, as a result, noise is generated. Therefore, the machine needs to be highly rigid, as it vibrates. A technique that is normally used in mechanical engineering for preventing the vibration during the travel of the carriage is to start slowly accelerating from speed 0 in S-curve control and maximize the acceleration between the maximum speed and the speed 0. However, the inventors have discovered that the vibration of the flat knitting machine cannot be prevented sufficiently by the S-curve control and that maximizing the acceleration in the vicinity of a return point is the condition for minimizing the vibration of the flat knitting machine, and consequently have reached the present invention.

### DISCLOSURE OF THE INVENTION

An object of the present invention is to prevent the vibration of a flat knitting machine.

It is known from EP 1672109A to provide a flat knitting machine in which a motor causes a carriage to travel back and forth between right and left return points on a needle bed, wherein a stroke of the carriage, going back and forth between the right and left return points, is divided into right and left return areas and a central fixed speed area, wherein the carriage travels at a fixed traveling speed, the flat knitting machine comprises a controller for controlling the motor such that the acceleration of the carriage is zero and the speed of the carriage is the fixed traveling speed at an entry side and exit side of each of the right and left return areas, and wherein the speed of the carriage smoothly changes between the fixed traveling speeds within the right and left return areas, in such a way that the point at which the acceleration has a maximum value, is provided at the return point of each of the right and left return areas, or is shifted from the return point by up to 20% of the width of the return area, and the speed becomes zero at each of the return points.

The present invention is characterised in that the point at which the acceleration has a maximum value serves as an inflection point of the speed and an inflection point of the speed does not exist anywhere besides the inflection point in each of the right and left return areas, further characterized in that the controller controls the motor to cause the carriage to travel at a sine curve speed where a phase becomes -90° and +90° at the entry side and exit side of each of the right and left return areas, and becomes 0° at the return point of each of the right and left return areas, and at a cosine curve acceleration where a phase becomes -90° and +90° at the entry side and exit side of each of the right and left return areas, and becomes 0° at the return point of each of the right and left return areas.

In this specification, the acceleration and the speed are used as values with no direction. The positions at which the acceleration has a maximum value are located in the vicinity of the return points. Therefore, those positions are in a range of 20% or preferably 10% from the return points within respective return areas.

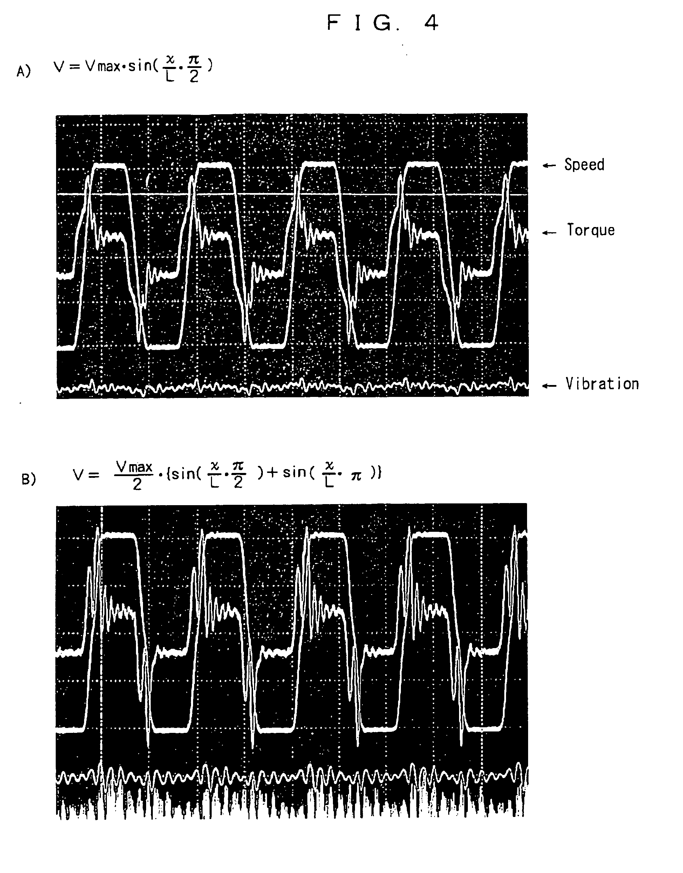

According to the present invention, the vibration that is generated as a result of the reciprocation of the carriage can be reduced, as shown in Fig. 4A). This effect is not created by normal S-curve control but is created when the carriage passes through the vicinity of the return points at the maximum acceleration. Specifically, when the time during which the carriage travels in each return area and the speed of the carriage traveling in the fixed speed area are made constant, there is not much difference in the level of vibration when the carriage travels in each return area at a constant acceleration during the S-curve control. Note that the speed of the carriage traveling in the fixed speed area is called "fixed traveling speed," which is the maximum speed of the carriage. Therefore, when a speed pattern at which the acceleration is zero at the entry and exit sides of each return area and the maximum acceleration is obtained at each return point and a speed pattern obtained by the S-curve control are combined together at a ratio of 1:1 (Fig. 4B)), the vibration becomes smaller, compared to a conventional example. Note that the entry and exit sides of each return area are located in the same position, which is a border between the fixed speed area and each return area. Fig. 4A) shows how control is performed with the speed pattern in which the acceleration becomes zero at the entry and exit sides of each return area and the maximum acceleration is obtained at each return point, without performing the S-curve control. According to the experiment conducted by the inventors, the vibration of the flat knitting machine is minimized with the speed pattern shown in Fig. 4A).

When the vibration of the flat knitting machine can be reduced:
- Noise that is generated when the carriage travels can be reduced,
- Rigidity can be reduced to realize a light-weight flat knitting machine by reducing the vibration of each part of the flat knitting machine, whereby easy installment of the flat knitting machine can be realized,
- The risk of abrasion or break damage caused on each part of the flat knitting machine can be reduced, and
- Knitting speed can be improved when the level of noise or vibration is minimised.

### BRIEF DESCRIPTION OF THE DRAWINGS

Fig. 1 is a block diagram of a flat knitting machine according to an embodiment;
Fig. 2 is a block diagram of a travel control system of a carriage according to the embodiment;
Fig. 3 is a diagram showing speed patterns obtained in the vicinity of return points of the carriage according to the embodiment and a comparative example;
Fig. 4 shows waveform diagrams of the speed patterns of the carriage, an output torque of a travel motor, and vibration acceleration of the carriage, according to Embodiment A) and Comparative Example B); and
Fig. 5 is a diagram showing the speed and acceleration of the carriage according to the embodiment and comparative example (S-curve control).

- 2: Flat knitting machine
- 4, 6: Needle bed
- 8: Carriage
- 10: Belt
- 12: Travel motor
- 14: Controller
- 16: Travel controller
- 18: Servo controller

### BEST MODE FOR CARRYING OUT THE INVENTION

The best mode for carrying out the present invention is described hereinafter, but the present invention is not limited to this mode.

### EMBODIMENT

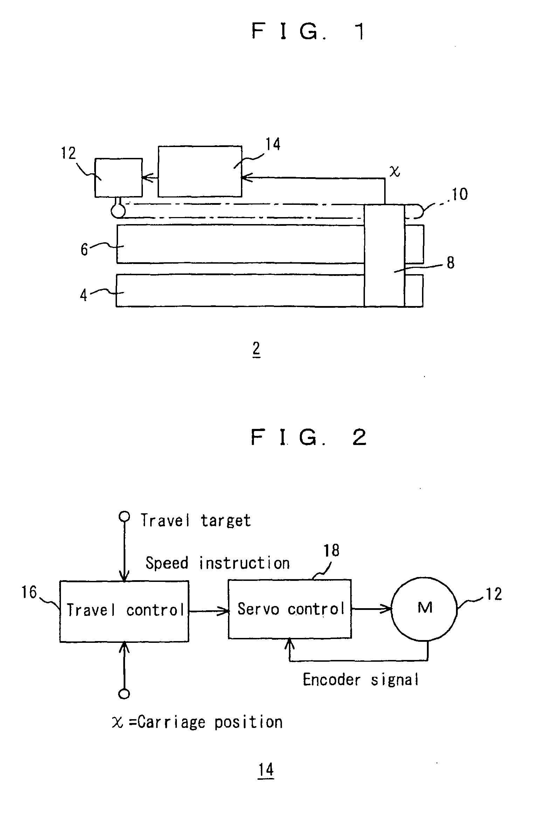

Fig. 1 to Fig. 5 each shows a flat knitting machine 2 of the embodiment and its operation. In each diagram, reference numeral 4 represents a front needle bed and reference numeral 6 a rear needle bed. Each of them may consist of one, two or three needle beds. Reference numeral 8 is a carriage, which is reciprocated by, for example, one endless belt 10 on the needle beds 4, 6. The belt 10 has teeth, but it may be in the form of a chain or provided as a pair on the front and rear needle beds 4, 6. A linear motor or the like may be used to cause the carriage 8 to travel. Reference numeral 12 is a travel motor, which drives the belt 10 to cause the carriage 8 to travel, and reference numeral 14 is a controller of the flat knitting machine 2.

As shown in Fig. 2, a travel controller 16 receives from a host controller, not shown, an input of a travel target such as the position of a return point, and receives from a sensor, not shown, an input of a position x of the carriage 8. The controller 16 generates a speed instruction based on a target position (return point) and the current position x of the carriage, and inputs these to the servo controller 18. The servo controller 18 detects the rotating speed of the travel motor 12 using an encoder or the like, and servocontrols the travel motor 12 in accordance with the speed instruction. Note that the speed instruction may be created by the servo controller 18 in place of the travel controller 16. The remaining distance to the target position may be input as the pulse number from the travel controller 16 to the servo controller 18, and the servo controller 18 may generate the speed instruction in accordance with the pulse number.

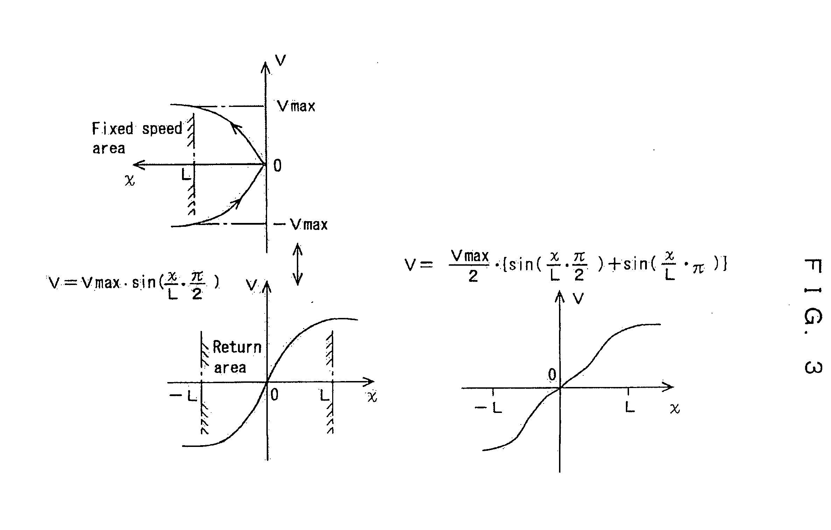

Fig. 3 shows traveling speed patterns of the carriage 8. Each of the origins in Fig. 3 indicates the return point. In the left diagram of Fig. 3, a fixed speed area exists on the left side of the origin. Note that the return areas exist on the right and left sides of a travel stroke, but the figure shows only one of the return areas. Because the carriage 8 reverses its direction after passing the return point at a speed 0, opening the upper speed pattern shown in Fig. 3 with respect to the origin results in the lower left speed pattern of Fig. 3. Reference numeral L indicates the width of the return area. The carriage travels the fixed speed area at a speed of Vmax and the return area in a speed pattern of V = Vmax·sin (x/L·π/2). In this speed pattern, the speed is 0 at the return point, and the speed then becomes ±Vmax at an end position of the return area where x = ±L is established. The maximum acceleration value exists at the origin (return point) and an inflection point of the speed (point where the first derivative of the acceleration becomes 0) does not exist anywhere but the origin. The speed smoothly changes along the sine curve, while the acceleration smoothly changes along the cosine curve. The acceleration becomes 0 at the entry and exit sides of the return area, while the speed smoothly changes between the fixed traveling speed ±Vmax.

As a first comparative example, the lower right figure in Fig. 3 shows a pattern obtained by mixing the speed pattern of sin (x/L·π/2) of the embodiment and a speed pattern of sin (x/L·π) at a ratio of 1:1. The maximum acceleration value exists in the vicinity of x = ±L/2 (center of the return area).

Fig. 4 shows a vibration waveform diagram 4A) obtained when performing the speed control according to the embodiment and a waveform diagram 4B) obtained when performing a control using the lower right figure of Fig. 3 according to the first comparative example. The data items are, from the top to bottom, the speed of the carriage, output torque of the travel motor, and acceleration generated from the vibration of the carriage. The speed of the carriage in the fixed speed area is 1.3 m/s in both figures. The horizontal axis indicates time, wherein each interval between the vertical dotted lines is 0.5 seconds. The maximum acceleration is approximately 18 m/s² in the comparative example, approximately 15 m/s² in the embodiment, and the traveling time per stroke is the same in both the embodiment and comparative example. The vibration is larger in the comparative example than in the embodiment.

In addition, the inventors measured the vibration when the S-curve control is performed with A = Amax·sin (x/L·π) and alternatively with a trapezoidal speed pattern in which the speed is changed at constant acceleration in the return area and the acceleration is discontinuously changed at the entry and exit sides of the return area. In the S-curve control, in which the acceleration is sin (x/L·π), the damping effect is small and there was not much difference in the level of vibration, compared to the conventional trapezoidal speed pattern in which the speed is changed from -Vmax to Vmax at constant acceleration. Note in the first comparative example shown in Fig. 4B) that the vibration of the carriage is smaller than that in the trapezoidal speed pattern, and the vibration is even smaller in the embodiment shown in Fig. 4A). The vibration of the carriage is measured in Fig. 4, and if the vibration of the carriage can be inhibited the vibration of each part of the flat knitting machine can also be inhibited.

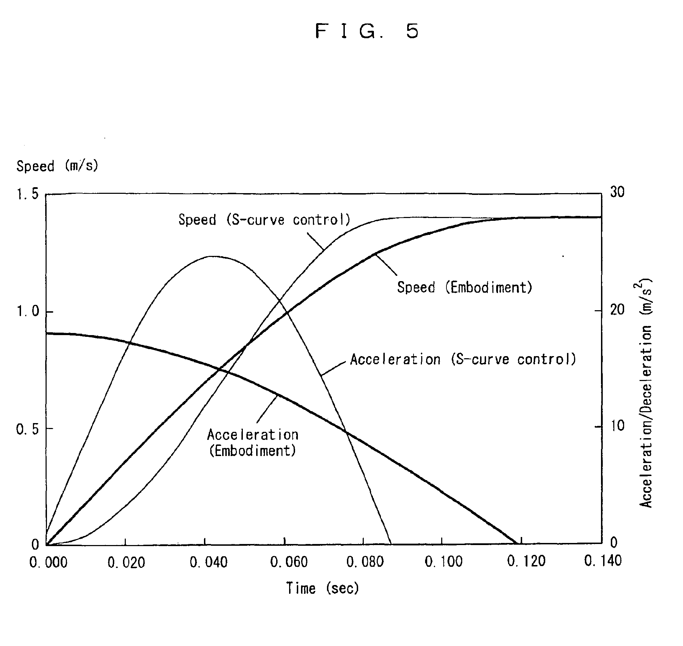

Fig. 5 shows patterns of the speed and acceleration according to the embodiment and a second comparative example (S-curve control). Required traveling time is the same for both patterns. In the embodiment, the carriage passes the return point at the maximum acceleration at a time 0 and reaches a steady speed at, for example, the time 0.12 second. When the S-curve control is performed the acceleration is reduced in the vicinity of the return point and reaches the maximum acceleration in a little over 0.04 seconds, which is the middle of the acceleration area, and then reaches the steady speed in 0.087 seconds.

Because the vibration of the flat knitting machine can be reduced in the embodiment, the traveling sound of the carriage can be reduced and the work environment can be improved. Reducing the vibration can allow a reduction of the rigidity of the machine, and therefore the force added to the floor of the installation site. In addition, the force applied to the carriage and needle beds can be reduced to improve the durability and extend a maintenance interval. When the level of vibration or noise is minimised, the traveling speed of the carriage can be increased to improve the knitting speed.

The speed pattern in the return area need not be limited to sin (x/L·π/2) of the embodiment and thus may be a pattern in which the acceleration is maximized and the speed is 0 at the return point, the acceleration is 0 at the entry and exit sides of the return area, the speed is ±Vmax and the inflection point of the speed does not exist anywhere but the return point. Strictly speaking, it is not necessary to maximize the acceleration at the return point, and therefore the maximum acceleration point may be shifted from the return point by, for example, approximately 10% of the width L of the return area.

## Claims

1. A flat knitting machine (2) in which a motor (12) causes a carriage (8) to travel back and forth between right and left return points on a needle bed (4, 6),
wherein a stroke of the carriage (8), going back and forth between the right and left return points, is divided into right and left return areas and a central fixed speed area, wherein the carriage (8) travels at a fixed traveling speed (±Vmax),
the flat knitting machine (2) comprises a controller (14) for controlling the motor (12) such that the acceleration of the carriage (8) is zero and the speed of the carriage (8) is the fixed traveling speed (±Vmax) at an entry side and exit side of each of the right and left return areas, and wherein the speed of the carriage (8) smoothly changes between the fixed traveling speeds (±Vmax) within the right and left return areas, in such a way that a point at which the acceleration has a maximum value, is provided at the return point of each of the right and left return areas, or is shifted from the return point by up to 20% of the width of the return area, and the speed becomes zero at each of the return points,
**characterised in that** the point at which the acceleration has a maximum value serves as an inflection point of the speed and an inflection point of the speed does not exist anywhere besides the inflection point in each of the right and left return areas,
further **characterized in that** the controller (14) controls the motor (12) to cause the carriage (8) to travel at a sine curve speed where the phase is -90° and +90° at the entry side and exit side of each of the right and left return areas, and is 0° at the return point of each of the right and left return areas, and at a cosine curve acceleration where the phase is -90° and +90° at the entry side and exit side of each of the right and left return areas, and is 0° at the return point of each of the right and left return areas.

## Patentansprüche

1. Flachstrickmaschine (2), in der ein Motor (12) bewirkt, dass ein Schlitten (8) zwischen rechten und linken Umkehrpunkten auf einem Nadelbett (4, 6) hin und her fährt,
wobei ein Hub des Schlittens (8), hin und her laufend zwischen den rechten und linken Umkehrpunkten, in rechte und linke Umkehrbereiche und einen zentralen Bereich mit fester Geschwindigkeit, in dem der Schlitten (8) mit einer festen Fahrgeschwindigkeit (±Vmax) fährt, aufgeteilt ist,
die Flachstrickmaschine (2) eine Steuereinheit (14) zum Steuern des Motors (12) derart umfasst, dass an einer Eingangsseite und einer Ausgangsseite von jedem der rechten und linken Umkehrbereiche die Beschleunigung des Schlittens (8) Null und die Geschwindigkeit des Schlittens (8) die feste Fahrgeschwindigkeit (±Vmax) ist, und wobei sich die Geschwindigkeit des Schlittens (8) zwischen den festen Fahrgeschwindigkeiten (±Vmax) innerhalb der rechten und linken Umkehrbereiche derart gleichmäßig ändert, dass ein Punkt, an dem die Beschleunigung einen Maximalwert aufweist, an dem Umkehrpunkt von jedem der rechten und linken Umkehrbereiche bereitgestellt ist, oder von dem Umkehrpunkt um bis zu 20% der Breite des Umkehrbereichs verschoben ist, und die Geschwindigkeit an jedem der Umkehrpunkte Null wird,
**dadurch gekennzeichnet, dass** der Punkt, an dem die Beschleunigung einen Maximalwert aufweist, als ein Wendepunkt der Geschwindigkeit dient und ein Wendepunkt der Geschwindigkeit nirgends sonst außer an dem Wendepunkt in jedem der rechten und linken Umkehrbereiche existiert,
ferner **dadurch gekennzeichnet, dass** die Steuereinheit (14) den Motor (12) steuert, um zu bewirken, dass der Schlitten (8) mit einer sinuskurvenförmigen Geschwindigkeit, wo die Phase -90° und +90° an der Eingangsseite und der Ausgangsseite von jedem der rechten und linken Umkehrbereiche ist und 0° am Umkehrpunkt von jedem der rechten und linken Umkehrbereiche ist, und mit einer kosinuskurvenförmigen Beschleunigung, wo die Phase -90° und +90° an der Eingangsseite und der Ausgangsseite von jedem der rechten und linken Umkehrbereiche ist und 0° am Umkehrpunkt von jedem der rechten und linken Umkehrbereiche ist, fährt.

## Revendications

1. Un métier à tricoter rectiligne (2) dans lequel un moteur (12) entraîne un chariot (8) à se déplacer d'avant en arrière entre des points de retour droit et gauche sur une fonture (4, 6),
dans lequel une course du chariot (8), allant d'avant en arrière entre les points de retour droit et gauche, est divisée en aires de retour droite et gauche et en une aire centrale de vitesse fixe, dans laquelle le chariot (8) se déplace à une vitesse de déplacement fixe (±Vmax),
le métier à tricoter rectiligne (2) comprend une unité de commande (14) pour commander le moteur (12) de telle façon que l'accélération du chariot (8) est nulle et la vitesse du chariot (8) est la vitesse de déplacement fixe (±Vmax) du côté de l'entrée et du côté de la sortie de chacune des aires de retour droite et gauche, et dans lequel la vitesse du chariot (8) change en douceur entre les vitesses de déplacement fixes (±Vmax) au sein des aires de retour droite et gauche, de telle façon qu'un point pour lequel l'accélération a sa valeur maximale, est prévu au point de retour de chacune des aires de retour droite et gauche, ou est décalé du point de retour de jusqu'à 20% de la largeur de l'aire de retour, et la vitesse devient nulle en chacun des points de retour,
**caractérisé en ce que** le point pour lequel l'accélération a sa valeur maximale sert de point d'inflexion de la vitesse et un point d'inflexion de la vitesse n'existe nulle part ailleurs qu'au point d'inflexion dans chacune des aires de retour droite et gauche,
**caractérisé en outre en ce que** l'unité de commande (14) commande le moteur (12) pour entraîner le chariot (8) à se déplacer avec une vitesse suivant une courbe de sinus où la phase est de -90° et +90° du côté de l'entrée et du côté de la sortie de chacune des aires de retour droite et gauche, et est de 0° au point de retour de chacune des aires de retour droite et gauche, et avec une accélération suivant une courbe de cosinus où la phase est de -90° et +90° du côté de l'entrée et du côté de la sortie de chacune des aires de retour droite et gauche, et est de 0° au point de retour de chacune des aires de retour droite et gauche.
